Europäisches Patentamt

European Patent Office

Office européen des brevets

(11) Publication number: **0 467 328 A2**

# EUROPEAN PATENT APPLICATION

(21) Application number: **91111940.2**

(22) Date of filing: **17.07.91**

(51) Int. Cl.⁵: **G02B 27/00, G02B 5/32**

(30) Priority: **19.07.90 JP 76151/90 U**

(43) Date of publication of application:
**22.01.92 Bulletin 92/04**

(84) Designated Contracting States:
**DE GB**

(71) Applicant: **YAZAKI CORPORATION**
**4-28, Mita 1-chome**
**Minato-ku Tokyo 108(JP)**

Applicant: **FUJITSU LIMITED**
**1015, Kamikodanaka Nakahara-ku**
**Kawasaki-shi Kanagawa 211(JP)**

(72) Inventor: **Suzuki, Masao, c/o Yazaki**
**Corporation**
**1500 Mishuku**
**Susono-shi, Shizuoka 410-11(JP)**

(74) Representative: **Patentanwälte Grünecker,**
**Kinkeldey, Stockmair & Partner**
**Maximilianstrasse 58**
**W-8000 München 22(DE)**

(54) **Holographic head up display apparatus.**

(57) A holographic head up display apparatus comprising: a luminous display means for emitting visible light; and a reflective holographic diffraction grating installed on an optical path introducing the visible light from the luminous display means to driver's eyes, wherein the reflective holographic diffraction grating has a diffraction-and-reflection characteristic having at least two-wavelength selectivity for diffracting and reflecting in the same direction at least two wavelength components contained in the visible light which is emitted from the luminous display means. In the present device, the brightness of the displayed virtual image is increased to the same extent when the wavelength band is broadened but without vignette of image due to chromatic aberration which is generated when a reflective holographic diffraction grating having a single wavelength selectivity diffracts and reflects visible light in the same direction.

FIG. 1

## BACKGROUND OF THE INVENTION

### 1. Field of the Invention

The present invention relates to a holographic head up display apparatus (H-HUD), and more particularly to a holographic head up display apparatus in which a displayed image of an indicator is reflected and the reflected image is seen by utilizing diffraction and reflection of light with reflective holographic diffraction grating, which is particularly suitable for an automotive display apparatus.

### 2. Description of the Prior Art

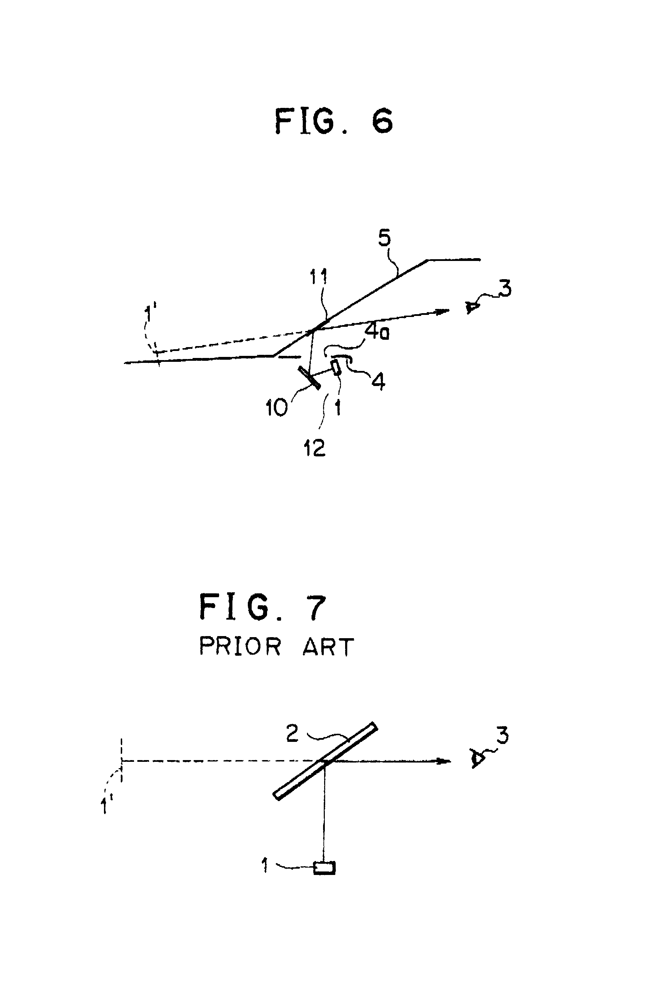

Conventionally, a holographic head up display apparatus shown in Fig. 7 is commonly available for an automotive display apparatus.

In the figure, reference numeral 1 represents an indicator for displaying various types of information which indicates driving condition such as vehicle speed. A luminous display apparatus emitting visible light by itself, such as liquid crystal display apparatus (LCD) with backlighting, a vacuum fluorescent tube (VFT) or the like, is available as the above indicator. The display apparatus is installed in a dashboard not shown with its display surface turn up. Denoted 2 is reflective holographic diffraction grating which is installed in the upper portion of the dashboard and within a viewing field of a windshield not shown as seen from a driver's seat, which diffracts and reflects the visible light from the indicator 1 in the direction of the driver's view point. As a result, the visible light from the indicator 1 is diffracted and reflected by the reflective holographic diffraction grating 2 to reach the driver's eyes 3 so that the driver is able to see a virtual image 1' which is formed in front of the windshield and the reflective holographic diffraction grating 2, and foreground through the windshield and the display apparatus by overlapping those views.

In the case as exemplified above, the reflective holographic diffraction grating 2 is an off-axis type, which does not overlap the diffraction-and-reflection direction and regular reflection direction. Further, the reflective holographic diffraction grating 2 has a function as a concave mirror in spite of its flat shape, by interfering different wavefronts at exposure. By virtue of the function as a concave mirror, the distance between the virtual image 1' and the reflective holographic diffraction grating 2 is kept adequately longer than the distance between the indicator 1 and the reflection holographic diffraction grating 2. That is, the function so-called far point convergence is provided.

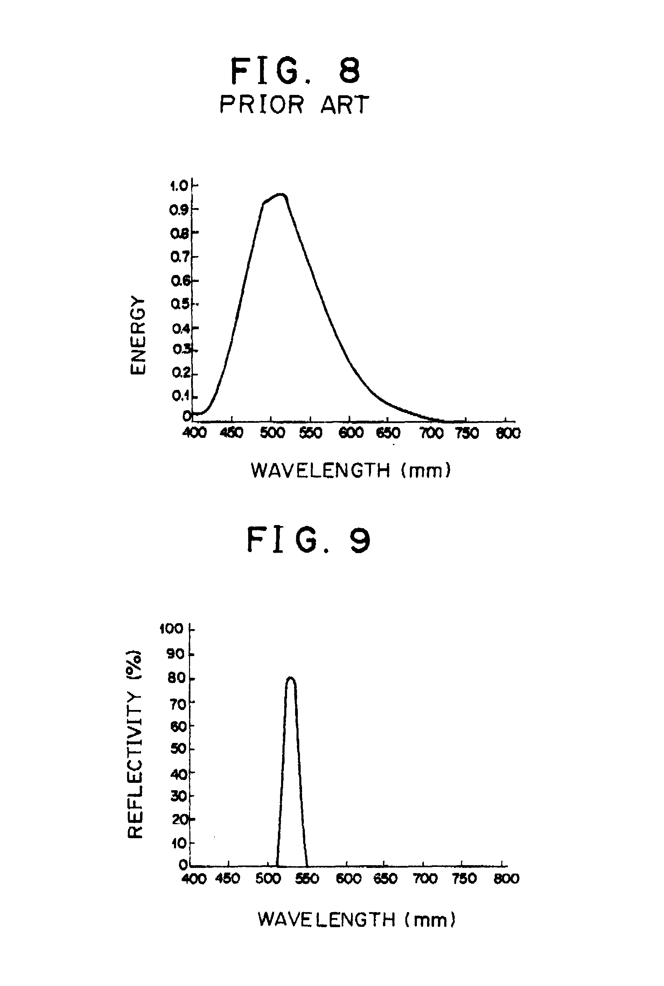

Meanwhile, as an example, an emitting spectrum and reflective factor of the reflective holographic diffraction grating 2 in cases where a vacuum fluorescent tube is applied to a indicator 1 are shown in Fig. 8 and Fig. 9.

Generally, in order to obtain a bright displayed image 1', the peak of reflectivity shown in Fig. 9 is raised and the band of wavelength is broadened to increase the reflection efficiency (diffraction efficiency) of the reflective holographic diffraction grating 2, which effectively utilizes the luminous energy of the vacuum fluorescent tube. However, excessive broadening of the wavelength band causes significant vignette of the displayed virtual image 1' due to chromatic aberration, which is generated by the phenomenon that reflection and diffraction directions change in accordance with the wavelength of the ray. Therefore, increasing brightness of the displayed virtual image has a limitation for a suitable balance of the brightness and the vignette caused by the chromatic aberration.

## SUMMARY OF THE INVENTION

To solve the problem in the conventional device described above, it is therefore an object of the present device to provide a holographic head up display apparatus in which bright displayed image with slight vignette is obtained.

In order to solve the foregoing problem described above, a holographic head up display apparatus according to the present invention comprises: a luminous display means for emitting visible light; and a reflective holographic diffraction grating installed on an optical path introducing said visible light from said luminous display means to drivers, wherein said reflective holographic diffraction grating has a reflection characteristic having at least two-wavelength selectivity for diffracting and reflecting in the same direction at least two wavelength components contained in said visible light which is emitted from said luminous display means.

In the configuration described above, since the reflective holographic diffraction grating, which is installed on the optical path introducing visible light to the driver's eyes, has a reflection characteristic having at least two-wavelength selectivity, and two wavelength components of the visible lights from the luminous display means are diffracted and reflected in the same direction, the brightness of the indicated virtual image can be increased to the same extent when the wavelength band is broadened but without vignette of image due to chromatic aberration which is generated when a reflective holographic diffraction grating having a single wavelength selectivity diffracts and reflects visible light in the same direction.

## BRIEF DESCRIPTION OF THE DRAWINGS

The present invention will be more apparent from the ensuring description with reference to the accompanying drawings wherein:

Figure 1 shows a holographic head up display apparatus according to one embodiment of the present device;

Figure 2 is a graph showing the reflection characteristic of the reflective holographic diffraction grating shown in Figure 1;

Figure 3 is a drawing for explaining production method of the reflective holographic diffraction grating shown in Figure 1;

Figures 4A and 4B are drawings for explaining one embodiment of the production method of a multi-layer reflective holographic diffraction grating;

Figures 5A and 5B are graphs for comparing the diffraction-and-reflection characteristic between a multiplexed reflective holographic diffraction grating and a multi-layer reflective holographic diffraction grating;

Figure 6 shows a holographic head up display apparatus according to another embodiment of the present device;

Figure 7 shows a holographic head up display apparatus according to one embodiment of the conventional device;

Figure 8 shows a spectrum of the visible light emitted from the indicator; and

Figure 9 shows the reflection characteristic of the conventional reflective holographic diffraction grating shown in Figure 7.

## DETAILED DESCRIPTION OF PREFERRED EMBODIMENTS

Now, one embodiment of the present device is described in reference with drawings.

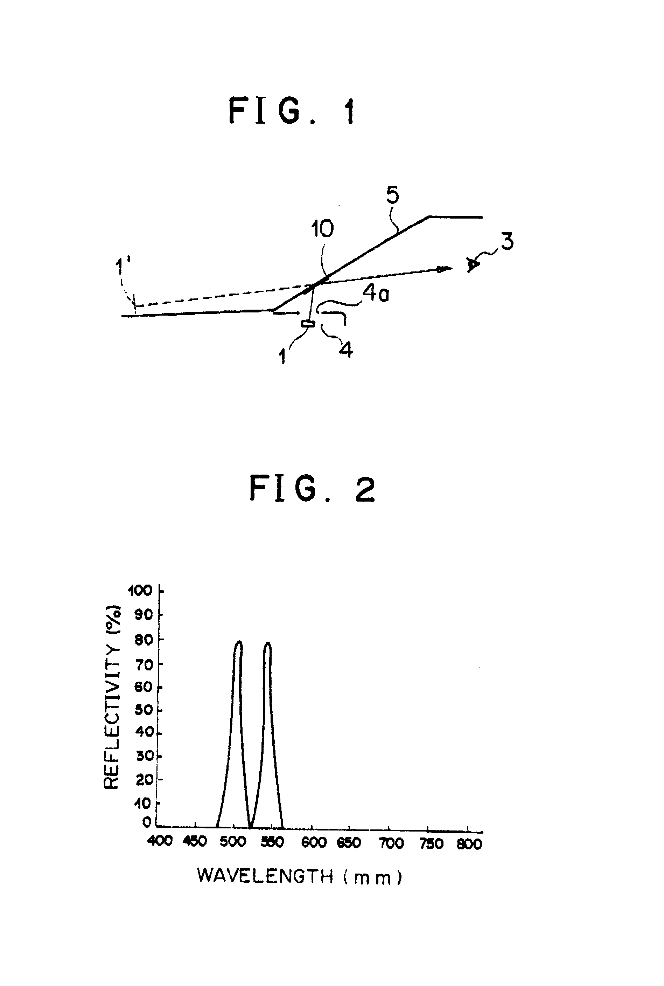

Figure 1 shows a H-HUD according to one embodiment of the present device. In the figure, the same symbols denote equivalent elements or portions shown in Fig. 7. Indicator 1 comprising a luminous display apparatus which emits visible light is installed in a dashboard 4 with display surface thereof turn up so that displayed image is reflected on the inner surface of the wind shield 5 through an opening 4a. A reflective holographic diffraction grating 10 is formed between the inner surface of the wind shield 5 and another glass on the inner surface of the wind shield to reflect and diffract visible light from the indicator 1 in the direction of driver's eyes 3. The reflective holographic diffraction grating has a reflective-and-diffractive characteristic having two-independent-wavelength selectivity, actually two-wavelength-band selectivity, as shown in Fig. 2, and diffraction and reflection directions of the two wavelength bands of the visible light from the indicator 1 are directed to the driver's eyes.

Consequently, two wavelength bands of the visible light from the indicator 1 are diffracted and reflected in the same direction by the reflective holographic diffraction grating 10 to reach the driver's eyes 3. As a result, the driver can see a virtual image 1' which is formed in front of the windshield 5 and the reflective holographic diffraction grating 10, and foreground through the windshield 5 and the reflective holographic diffraction grating 10 by overlapping those views.

The reflective holographic diffraction grating 10 has a function as a concave mirror in spite of its flat shape by interfering different wavefronts at exposure. By virtue of the function as a concave mirror, the reflective holographic diffraction grating 10 has a far point convergence function (lens-and-mirror function). Then, the driver can see the displayed virtual image 1', which is enlarged and is seen at a long distance, and foreground through the windshield 5 by overlapping them.

As described above, since the reflective holographic diffraction grating 10 has the two-wavelength selectivity to diffract and reflect in the same direction two wavelength bands of the visible light from the indicator 1, a bright displayed virtual image 1' is obtained and vignette of the image dub to chromatic aberration can be mitigated without excessively broadening the wavelength band.

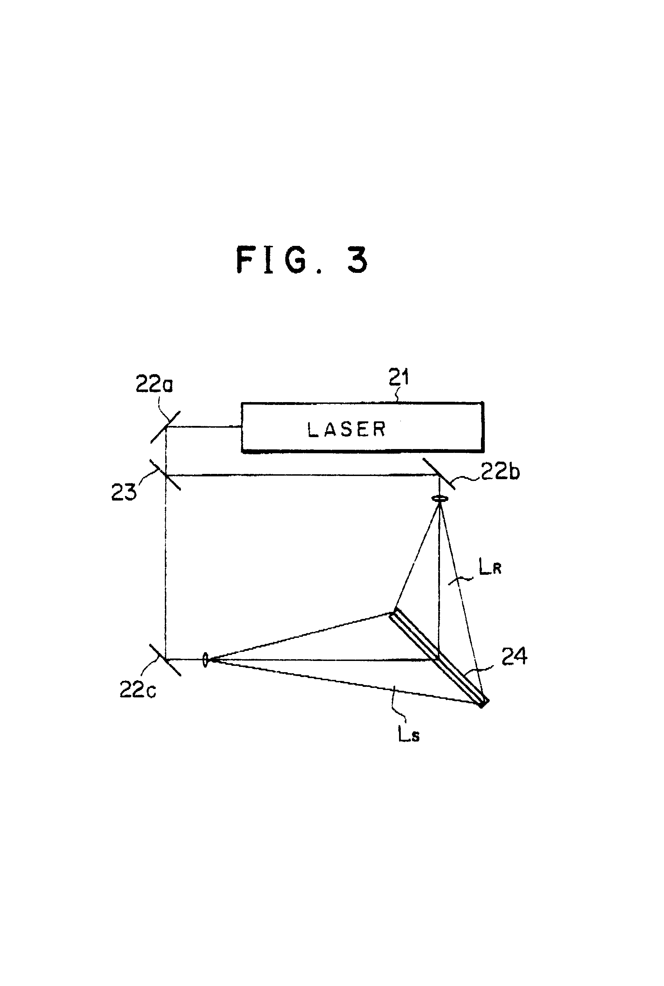

The reflective holographic diffraction grating 10 having the above characteristics is produced with first hologram recording optical setup as shown in Fig. 3. As an example, to produce the reflective holographic diffraction grating 10, a recording film made of dichromated gelatin is exposed to coherent lightwaves forming interference fringe in the film. After the exposure, the film is exposed with second hologram recording optical setup with coherent light source having different wavelength from the first hologram recording system.

Further, a production method of such reflective holographic diffraction grating by multiple exposure is also described in chap. 7 of "OPTICAL HOLOGRAPHY" (Bell Telephone Laboratories, Robert J. Collier et al).

That is, as shown in Fig. 3, a laser beam L from a laser 21 is reflected by a mirror 22a and then the laser beam is split into two by a semitransparent mirror 23. One beam of the divided two beams is further reflected and is applied to a side of a substrate 24 with gelatin as reference beam LR having spherical wave, and the other beam is further reflected by a mirror 22c and is applied to the other side of the substrate 24 as signal beam LS to combine the two beams. As a result, a holographic in which interference fringes are recorded on the film in the direction of thickness of the gelatin film.

Meanwhile, as an example, a production method of a multi-layer reflective holographic diffraction grating is disclosed in Japanese Patent Laid-open Heisei 2-245707.

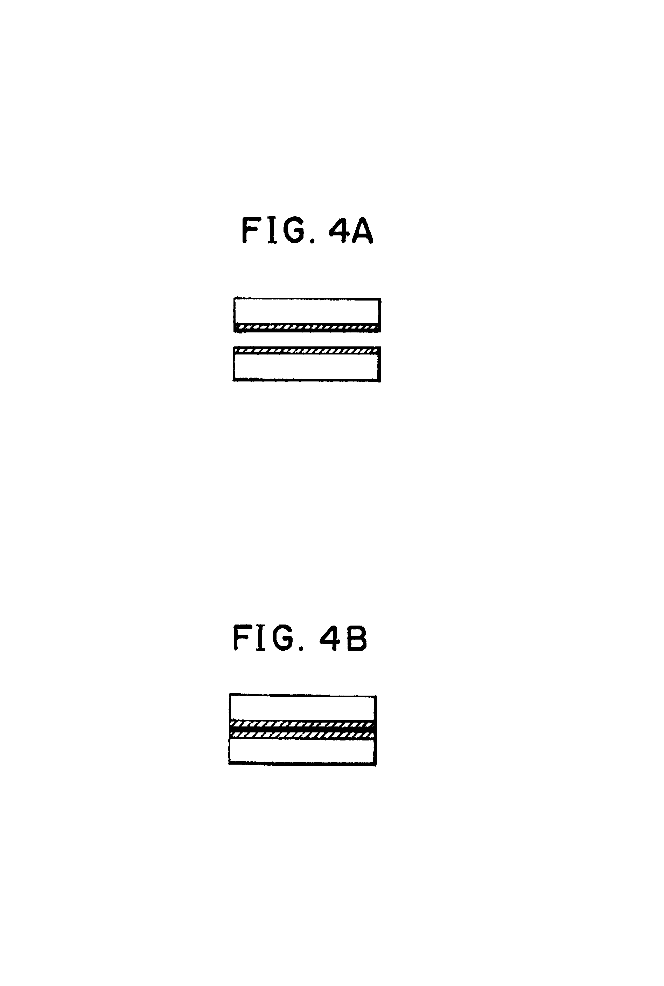

Further, as shown in Fig. 4, the multi-layer reflective holographic diffraction grating is produced by combining two holograms which are formed by exposing gelatin film made of dichromated gelatin one by one with two hologram recording setups having coherent light source with different wavelengths. Figure 4A shows two holograms before combining each other. In the figure, denoted 13 are holograms, which are exposed and developed one by one, and numeral 14 are substrates. Figure 14B shows the state where those holograms are combined each other with bonding agent 15.

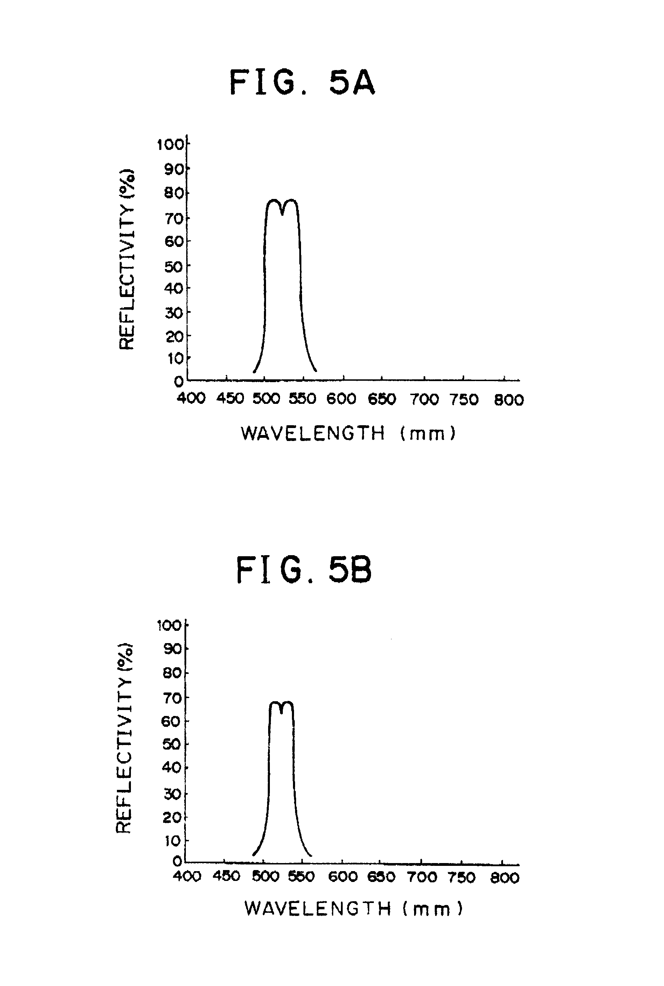

Next, the difference in effect between a multilayer reflective holographic diffraction grating and multiflexed reflective holographic diffraction grating is explained. Figures 5A and 5B show the diffraction-and-reflection characteristics of the multi-layer and multiplexed reflective holographic diffraction gratings when the same visible light is applied to the holograms. Figure 5A shows the characteristic of the multi-layer reflective holographic diffraction grating and 5B the multiplexed reflective holographic diffraction grating. As apparent from the graphs, the multi-layer hologram is about 10 % higher in peak value of the reflectivity and about 10 nm wider in reflective wavelength band than those of the multiplexed hologram. That is, the multilayer hologram shows better performance than the multiplexed hologram. The reason is that in the multiplexed hologram, two sets of gratings are recorded in a single photosensitive layer, which reduces contrast between gratings and other portions to increase a sort of noise. As a result, the hologram reduces in reflective factor. On the other hand, in multi-layer hologram, the bonding agent layer has little effect to the reflectivity.

Furthermore, the multi-layer hologram produced by the method described in Figs. 4A and 4B has following advantages in productivity in comparison to the multiplexed hologram. That is, the multi-layer hologram is to be produced by combining a plurality of holograms each exposed one by one, permitting combination of nondefectives. However, in multiplexed hologram, all process for exposure should be carried out successfully to obtain a nondefective. Therefore, the multi-layer hologram is superior in yield of products to the multiplexed hologram.

On the other hand, two base plates are required to produce one multi-layer hologram, and one multiplexed hologram also requires two base plates because a cover glass is essentially used. In the number of development process, two processes are necessary to form one multi-layer hologram due to separate development, but, only one development process is necessary to form one multiplexed hologram, which is a disadvantage of the multi-layer hologram. However, the above advantages of the multi-layer hologram has greater influence on the production cost.

As described above, the use of the multi-layer hologram will reduce production cost of holograms in comparison to the multiplexed hologram, permitting the reduction in production cost of holographic head up display apparatus.

In the embodiment shown in Fig. 1, visible light, which is diffracted and reflected by the reflective holographic diffraction grating 10, is directly seen by the driver. As another example, the diffracted and reflected beam may be seen by the driver after further reflecting the beam by a semitransparent mirror 11 formed on the wind shield 5 as a semitransparent reflection member, as illustrated in Fig. 6.

That is, in the embodiment shown in Fig. 6, the semitransparent mirror 11 is installed in such a manner that visible light from the indicator 1 is diffracted and reflected by the same reflective holographic diffraction grating 10 as the embodiment illustrated in Fig. 1 to reflect the visible light to the driver's side. By virtue of the configuration described above, the visible light from the indicator 1 is diffracted and reflected by the reflective holographic diffraction grating 20, impinging the semitransparent mirror 11 to be reflected by the mirror 11, which reaches the driver's eyes 3. The driver is able to see the displayed virtual image 1', which is enlarged and is seen at a distance, and foreground at the same time by overlapping them. In the H-HUD used in the above configuration, a part of sun light entering an indicator unit 12 reaches the indicator 1, being reduced in intensity by the wavelength selectivity of the reflective holographic diffraction grating 10. As a result, washout of the indicator 1 can be mitigated. Further, since infrared rays pass through the reflective holographic diffraction grating 10, increase in temperature in the indicator 1 and the indicator unit 12 can be mitigated.

As described above, in the present device, since the reflective holographic diffraction grating, which is installed on the optical path introducing visible light to the driver's eyes, has a reflection characteristics having at least two-wavelength selectivity, and the two wavelength bands of light are diffracted and reflected in the same direction to brighten the indicated virtual image to the same extent when the wavelength band is broadened but without vignette of image due to chromatic aberration which is generated when a reflective holographic diffraction grating having a single wavelength selectivity diffracts and reflects visible lights in the same direction, a bright virtual image with slight vignette due to chromatic aberration can be obtained.

## Claims

1. A holographic head up display apparatus comprising:

   a luminous display means for emitting visible light; and a reflective holographic diffraction grating installed on an optical path introducing said visible light from said luminous display means to driver's eyes, wherein said reflective holographic diffraction grating has a diffraction-and-reflection characteristic having at least two-wavelength selectivity for diffracting and reflecting in the same direction at least two wavelength components contained in said visible light which is emitted from said luminous display means.

2. A holographic head up display apparatus as claimed in claim 1, therein said visible light emitted from said luminous display means includes a monochromatic light having a single peak wavelength.

3. A holographic head up display apparatus as claimed in claim 1 or 2, wherein said reflective holographic diffraction grating includes multiplexed reflective holographic diffraction grating.

4. A holographic head up display apparatus as claimed in claim 1 or 2, wherein said reflective holographic diffraction grating includes multilayer reflective holographic diffraction grating.

5. A reflective holographic diffraction grating as claimed in claim 4, wherein said multi-layer reflective holographic diffraction grating is formed by combining two holograms which are exposed one by one.

6. A holographic head up display apparatus as claimed in claim 1, wherein a semitransparent mirror as a semitransparent reflection means is provided on an optical path between said reflective holographic diffraction grating and the driver.

# FIG. 1

# FIG. 2

# FIG. 3

FIG. 4A

FIG. 4B

# FIG. 5A

# FIG. 5B

# FIG. 6

# FIG. 7
## PRIOR ART

# FIG. 8
## PRIOR ART

WAVELENGTH (mm)

# FIG. 9

WAVELENGTH (mm)